Europäisches Patentamt

European Patent Office

Office européen des brevets

(19)

(11) Veröffentlichungsnummer: **0 159 606**
**B1**

(12) **EUROPÄISCHE PATENTSCHRIFT**

(45) Veröffentlichungstag der Patentschrift:
04.01.89

(21) Anmeldenummer: 85104195.4

(22) Anmeldetag: 06.04.85

(51) Int. Cl.⁴: **A 47 G 19/12, A 47 J 45/06**

(54) **Haushaltsgefäss mit angeklebtem Griff.**

(30) Priorität: 21.04.84 DE 3415120

(43) Veröffentlichungstag der Anmeldung:
30.10.85 Patentblatt 85/44

(45) Bekanntmachung des Hinweises auf die Patenterteilung:
04.01.89 Patentblatt 89/1

(84) Benannte Vertragsstaaten:
DE FR GB IT NL

(56) Entgegenhaltungen:
DE-A-3 048 783
DE-A-3 109 759
DE-A-3 305 857

(73) Patentinhaber: **Braun Aktiengesellschaft,
Rüsselsheimer Strasse 22, D-6000 Frankfurt/Main
(DE)**

(72) Erfinder: **Majthan, Rudolf, Sodener Weg 14, D-6236
Eschborn (DE)**

(74) Vertreter: **Einsele, Rolf, Braun Aktiengesellschaft
Postfach 1120 Frankfurter Strasse 145, D-6242
Kronberg Taunus (DE)**

## Beschreibung

Die vorliegende Erfindung betrifft ein Haushaltsgefäß mit einem durch Klebung befestigten Griff, wobei die Kontaktfläche der Gefäßwand im wesentlichen glattflächig und geschlossen ist und die Kontaktfläche des Griffes angeformte Distanzkörper aufweist, deren Höhe der Dicke der Kleberschicht entspricht.

Derartige Gefäße, die insbesondere aus Porzellan, Glas, Keramik, Metall oder Kunststoffen bestehen können, sind z. B. in Form von Glas-Kaffeekannen aus der DE-OS-3 048 783 bekannt. Die in dieser Schrift beschriebene Griffklebung ist durch eine verhältnismäßig aufwendige Gestaltung des Griffes und insbesondere seiner Kontaktfläche gekennzeichnet, die zu ihrer Herstellung entsprechend komplizierte und aufwendige Formwerkzeuge erfordert. Die bekannten Griffe entsprechen der Lehrmeinung, daß für eine optimale Verklebung - insbesondere bei Verwendung von Klebern, die zu ihrer Aushärtung mit der Raumluft und/oder Raumfeuchtigkeit reagieren müssen - die Kotaktflächen mit Durchbrüchen versehen sein sollten, über die der Kleber im gesamten Kontaktbereich mit der Raumatmosphäre in Verbindung steht.

Der vorliegenden Erfindung liegt die Aufgabe zugrunde, ohne derart komplizierte Formung der Griffe bzw. Griffteile zu einer allen Festigkeitsanforderungen gerecht werdenden Verklebung zu gelangen.

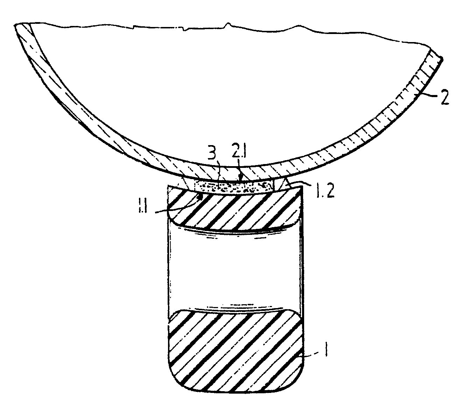

Überraschenderweise wird diese Aufgabe erfindungsgemäß durch die verhältnismäßig einfach realisierbaren Maßnahmen nach dem kennzeichnenden Teil des Anspruchs 1 gelöst, die in der beigefügten Zeichnung schematisch veranschaulicht sind: Die Distanznoppen 1.2, von denen vorzugsweise drei oder vier auf dem Rand der Kontaktfläche 1.1 des Griffes oder Griffteiles 1 vorgesehen sind, sorgen dafür, daß nicht nur eine genau definierte Klebstoff-Schichtstärke zwischen der Kontaktfläche 1.1 des Griffes und der Kontaktfläche 2.1 des Gefäßes zuverlässig eingehalten wird, sondern sie stellen zugleich den für das Ausreagieren des Klebers 3 erforderlichen Kontakt mit der Raumatmosphäre sicher, da sie rings um die Kleberschicht einen ihrer Höhe entsprechenden umlaufenden Luftspalt offenhalten.

Zugleich bietet die erfindungsgemäße Griffgestaltung und das damit realisierbare Verklebungsergebnis den Vorteil eines wichtigen Nebeneffektes: Der offene Spalt zwischen dem Griff 1 und der Gefäßwand 2 ist jederzeit - von Hand ebenso wie in der Geschirrspülmaschine - leicht zu reinigen, und im Gegensatz zu abstandslos eng aufgesetzten Griffen oder Griffteilen 1 setzt sich in ihm keine für Säuberungsmaßnahmen unzugängliche bleibende Verschmutzung fest.

Vorzugsweise werden erfindungsgemäß drei oder vier - insbesondere regelmäßig oder symmetrisch - auf dem Randbereich der Kontaktfläche 1.1 des Griffes 1 angeordnete Distanznoppen 1.2 vorgesehen. In einer zweckmäßigen Ausführungsform ist die Kontaktfläche des Griffes etwa rechteckig und weist im Bereich ihrer Ecken je eine Distanznoppe auf. Für die Höhe der Distanznoppen 1.2 hat sich der Bereich von 0,5 bis 3 mm als vorteilhaft erwiesen, da in ihm mit den im vorliegenden Anwendungsbereich in Betracht kommenden Klebern die günstigsten Aushärtungszeiten bei gleichzeitig optimaler Klebwirkung realisierbar sind.

Als besonders zweckmäßig haben sich - insbesondere auch unter den genannten Verschmutzungsgesichtspunkten - kegel- und pyramidenförmige Distanznoppen erwiesen. Des weiteren zeichnet sich eine vorteilhafte Ausführungsform der Erfindung dadurch aus, daß nicht die gesamte mögliche Kontaktfläche 1.1 des Gefäßgriffes - d. h., nicht die gesamte der Gefäßwandung zugewandte Rückseite des Griffes - über eine durchgehende Kleberschicht mit der Gefäßwandung 2 in Verbindung steht, sondern daß der Kleber nur an einem Teil oder Teilen der Griff-Kontaktfläche angreift und beispielsweise etwa kreisförmige Klebeflächen bildet.

Die vorliegende Erfindung läßt sich mit Vorteil auf alle praktisch in Betracht kommenden Paarungen von Kannen- und Griffwerkstoffen mit den jeweils geeigneten Klebertypen und gegebenenfalls Primern anwenden. Besonders vorteilhaft kann sie bei der Verklebung von Kunststoffgriffen an Glaskannen angewandt werden, wobei vorzugsweise einkomponentige Silikonkleber zum Einsatz kommen.

## Patentansprüche

1. Haushaltsgefäß mit einem durch Klebung befestigten Griff, wobei die Kotaktfläche (2.1) der Gefäßwand (2) im wesentlichen glatt flächig und geschlossen ist und die Kontaktfläche (1.1) des Griffes angeformte Distanzkörper aufweist, deren Höhe der Dicke der Kleberschicht (3) entspricht, dadurch gekennzeichnet, daß die Kontaktfläche (1.1.) des Griffes (1) im wesentlichen glattflächig und geschlossen ist und daß die Distanzkörper als Distanzleisten oder -noppen (1.2) derart auf dem Randbereich der Kontaktfläche (1.1) des Griffes (1) angeordnet sind, daß zwischen den Distanzleisten oder -noppen (1.2) und der Kleberschicht (3) ein diese umgebender, seitlich mit der Raumatmosphäre zum Ausreagieren der Kleberschicht in Kontakt stehender Luftspalt vorhanden ist, der eine den Distanzleisten oder -noppen (1.2) entsprechende Höhe aufweist.

2. Haushaltsgefäß nach Anspruch 1, dadurch gekennzeichnet, daß drei oder vier Distanznoppen (1.2) auf dem Randbereich der Kontaktfläche (1.1) des Griffes vorgesehen sind.

3. Haushaltsgefäß nach Anspruch 2, dadurch gekennzeichnet, daß die Kontaktfläche (1.1) des Griffes (1) etwa rechteckig ist und im Bereich ihrer Ecken je eine Distanznoppe (1.2) aufweist.

4. Haushaltsgefäß nach einem der Ansprüche 1 bis 3, dadurch gekennzeichnet, daß die Distanznoppen 0,5 bis 3 mm hoch sind.

5. Haushaltsgefäß nach einem der Ansprüche 1 bis 4, dadurch gekennzeichnet, daß die Distanznoppen (1.2) kegel- oder pyramidenförmig sind.

6. Haushaltsgefäß nach einem der Ansprüche 1 bis 5, dadurch gekennzeichnet, daß die mögliche Kontaktfläche (1.1) des Griffes größer ist als die tatsächliche Klebefläche.

7. Haushaltsgefäß nach einem der Ansprüche 1 bis 6, dadurch gekennzeichnet, daß der verwendete Kleber (3) ein Einkomponenten-Silikonkleber ist.

## Revendications

1. Récipient à usage ménager avec une poignée fixée par collage, la surface de contact (2.1) de la paroi (2) du récipient étant sensiblement lisse et continue, et la surface de contact (1.1) de la poignée présentant des éléments d'écartement dont la hauteur correspond à l'épaisseur de la couche de colle, caractérisé par le fait que la surface de contact (1.1) de la poignée (1) est sensiblement lisse et continue et par le fait que les éléments d'écartement sont agencés sous forme de nervures d'écartement ou reliefs d'écartement (1.2) sur la région marginale de la surface de contact (1.1) de la poignée (1), de manière qu'il y ait, entre les nervures ou reliefs d'écartement (1.2) et la couche de colle (3), un interstice d'air qui les entoure et se trouve latéralement au contact de l'atmosphère pour faire réagir la couche de colle et qui présente une hauteur correspondant aux nervures ou reliefs d'écartement (1.2).

2. Récipient à usage ménager selon revendication 1, caractérisé par le fait que trois ou quatre reliefs d'écartement (1.2) sont prévus sur la région marginale de la surface de contact (1.1) de la poignée.

3. Récipient à usage ménager selon revendication 2, caractérisé par le fait que la surface de contact (1.1) de la poignée (1) est sensiblement rectangulaire et présente un relief d'écartement (1.2) dans la région de chacun de ses coins.

4. Récipient à usage ménager selon l'une des revendications 1 à 3, caractérisé par le fait que les reliefs d'écartement sont hauts de 0,5 a 3 mm.

5. Récipient à usage ménager selon l'une des revendications 1 a 4, caractérisé par le fait que les reliefs d'écartement (1.2) sont en forme de cône ou de pyramide.

6. Récipient à usage ménager selon l'une des revendications 1 à 5, caractérisé par le fait que la surface de contact possible (1.1) de la poignée est plus grande que la surface de collage effective.

7. Récipient à usage ménager selon l'une des revendications 1 à 6, caractérisé par le fait que la colle utilisée (3) est une colle silicone à un seul composant.

## Claims

1. Household vessel wich a handle cemented thereto, which the concact surface (2.1) of the vessel wall (2) substantially having a smooth surface and being closed, while the contact surface (1.1) of the handle is furnished wich spacer elements shaped thereat, the height of which corresponds to the thickness of the cementing layer (3), characterized in that the contact surface (1.1) of the handle (1) substantially has a smooth surface and is closed, and in that the spacer elements are arranged as spacer strips of spacer knobs (1.2) in such a manner on the fringe area of che contact surface (1.1) of the handle (1) that, intermediate the spacer strips of spacer knobs (1.2) and the cementing layer (3), there is an air gap encompassing these and being sideways in contact wich the ambient air to allow the reaction of the cementing layer, the said air gap's height corresponding to the spacer strips or spacer knobs (1.2).

2. Household vessel as claimed in claim 1, characterized in that three or four spacer knobs (1.2) are arranged an the fringe area of the contact surface (1.1) of the handle.

3. Household vessel as claimed in claim 2, characterized in that the contact surface (1.1) of the handle (1) is roughly rectangular and disposes of each one spacer knob (1.2) in the area of its corners.

4. Household vessel as claimed in any one of the claims 1 to 3, charaterized in that the spacer knobs are 0.5 to 3 mms high.

5. Household vessel as claimed in any one of the claims 1 to 4, characterized in that the spacer knobs (1.2) are of conical or pyramidal design.

6. Household vessel as claimed in any one of the claims 1 to 5, characterized in that the possible contact surface (1.1) of the handle is larger than the actual adhesive surface.

7. Household vessel as claimed in any one of the claims 1 to 6, characterized in that the adhesive (3) used is a one-component silicone cementing agent.